Europäisches Patentamt

European Patent Office

Office européen des brevets

(19)

(11) EP 0 947 830 A1

(12) DEMANDE DE BREVET EUROPEEN

(43) Date de publication:
06.10.1999 Bulletin 1999/40

(51) Int Cl.6: G01N 27/90, G01N 27/72

(21) Numéro de dépôt: 99400348.1

(22) Date de dépôt: 12.02.1999

(84) Etats contractants désignés:
AT BE CH CY DE DK ES FI FR GB GR IE IT LI LU
MC NL PT SE
Etats d'extension désignés:
AL LT LV MK RO SI

(30) Priorité: 05.03.1998 FR 9802722

(71) Demandeur: Sprint Métal - Société de Production
Internationale de Tréfiles
92800 Puteaux (FR)

(72) Inventeurs:
• Laverroux, Michel
  91600 Savigny sur Orge (FR)
• Megel, Pierre
  58160 Sauvigny les Bois (FR)

(74) Mandataire: Bouget, Lucien et al
Cabinet Lavoix
2, Place d'Estienne d'Orves
75441 Paris Cédex 09 (FR)

(54) Procédé et dispositif de mesure d'une caractéristique mécanique d'un produit long métallique, procédé de production en continu d'un produit long, et produit obtenu

(57) On fait passer le produit long (2) à travers au moins un bobinage électromagnétique (14) alimenté en courant variable, on mesure en continu l'impédance du bobinage électromagnétique et on détermine la caractéristique mécanique du produit long ou ses variations par comparaison de l'impédance mesurée avec au moins une valeur d'impédance prédéterminée. Le procédé peut être utilisé en particulier pour réguler un procédé de production d'un fil pour ressort en acier austénitique à l'état hypertrempé renfermant de la martensite (α') par tréfilage du fil dans des filières successives (3). On mesure l'impédance du bobinage (14) dans lequel passe le fil (2) à la sortie d'au moins une filière (3), de manière à régler au moins un des paramètres, température de la filière et du fil (2) et vitesse de défilement du fil.

FIG.1

EP 0 947 830 A1

## Description

L'invention concerne un procédé et un dispositif de mesure d'une caractéristique mécanique d'un produit long métallique, un procédé de production en continu d'un produit long et le produit long obtenu. L'invention s'applique en particulier à la fabrication de ronds ou profilés.

Il est connu de fabriquer des produits longs tels que des fils ou des barres de faible section, par exemple par un procédé de laminage, de tréfilage ou d'étirage, dans lequel le produit long défile en continu dans l'installation de laminage, de tréfilage, ou d'étirage jusqu'à la sortie de l'installation où le produit long peut être enroulé, par exemple sous la forme d'une bobine ou d'une couronne, ou se présenter sous forme de barre.

Des produits plats tels que des feuillards peuvent être également fabriqués en continu, par exemple par laminage. Bien que de tels produits ne soient pas généralement désignés comme produits longs, ce terme utilisé par la suite pourra désigner également des produits plats de faible largeur auxquels l'invention est applicable.

Il est connu de fabriquer des fils en acier austénitique d'un diamètre parfaitement ajusté par tréfilage d'un fil machine ou d'une barre dont on réduit le diamètre par passage dans une ou plusieurs filières successives de diamètres décroissants. La traction sur le fil, à la sortie de chaque filière, est assurée par un cabestan. Le fil peut subir les différentes opérations de tréfilage de manière totalement continue par passages successifs dans les filières ou en plusieurs étapes à la suite de chacune desquelles on obtient un produit intermédiaire qui est à nouveau tréfilé à un diamètre plus faible.

Il est connu, en particulier, de fabriquer par tréfilage des fils en acier inoxydable austénitiques dont l'austénite métastable est susceptible de se transformer partiellement ou totalement en martensite sous l'effet de déformations plastiques. Ces fils, dont la résistance mécanique peut atteindre environ 2000 MPa, ont des usages divers et, en particulier, peuvent être utilisés pour la fabrication de ressorts.

Les fils de ce type, obtenus à l'issue de l'opération de tréfilage sous forme de bobine ou de couronne, ont des caractéristiques mécaniques qui dépendent non seulement de la composition chimique de l'acier, mais, également des conditions de tréfilage. Afin de garantir une bonne régularité des caractéristiques mécaniques des fils, on prélève en extrémité de chaque bobine ou couronne, ou sur une portion de fil réalisé par un tréfilage d'essai, un échantillon sur lequel on effectue des essais de traction. Au vu des résultats de ces essais, on ajuste les conditions de tréfilage, et en particulier la vitesse de tréfilage, soit pour une série de bobines, soit pour chaque bobine. Cette façon de procéder, complétée éventuellement par un tri final des bobines ou des couronnes, permet de garantir que la résistance mécanique obtenue se situe dans une plage de dispersion de 100 MPa autour de la valeur visée. Cette dispersion, généralement acceptée et imposée par les normes habituelles, est parfois considérée comme trop importante, et il est souhaitable de la réduire. Le seul moyen connu pour cela est un tri plus sévère que celui qui est pratiqué habituellement.

Par ailleurs, lorsque ces fils sont utilisés pour fabriquer des ressorts hélicoïdaux, on constate une dispersion de la géométrie des ressorts obtenus, non seulement lorsqu'ils sont issus de bobines ou couronnes différentes, mais également lorsqu'ils sont issus de la même bobine ou de la même couronne. Il est alors nécessaire d'effectuer un tri des ressorts et d'éliminer ceux qui n'ont pas une géométrie satisfaisante.

Le but de la présente invention est de remédier à cet inconvénient en proposant un moyen pour fabriquer des fils tréfilés en acier austénitique dont l'austénite est susceptible de se transformer partiellement ou totalement en martensite par déformation plastique, qui soient tels qu'ils permettent de fabriquer sans qu'un tri soit nécessaire, des ressorts hélicoïdaux dont les caractéristiques sont peu dispersées.

A cet effet, l'invention a pour objet un moyen pour mesurer en continu les caractéristiques mécaniques d'un produit long selon lequel on fait passer le produit long à travers au moins une spire d'un bobinage électromagnétique alimenté en courant variable, on mesure en continu l'impédance du bobinage électromagnétique et on détermine la caractéristique mécanique du produit long ou ses variations par comparaison de l'impédance mesurée avec au moins une valeur d'impédance prédéterminée.

Ce moyen de mesure en continu des caractéristiques mécaniques d'un produit long peut être disposé en sortie d'un outil de mise en forme par déformation plastique, et par exemple, en sortie d'une filière de tréfilage. La mesure ainsi obtenue peut être utilisée notamment pour réguler en continu les conditions de mise en forme, et par exemple les conditions de tréfilage. On peut ainsi obtenir des produits longs dont les caractéristiques mécaniques sont naturellement peu dispersées, et notamment des fils dont la résistance à la traction visée est d'environ 2000 MPa et dont la résistance à la traction mesurée se situe dans une plage de dispersion de 20 MPa. Lorsque de tels fils sont utilisés pour fabriquer des ressorts, il n'est plus indispensable d'effectuer un tri des ressorts pour obtenir des lots de ressorts bien homogènes.

De plus, si avant d'effectuer le tréfilage d'un fil de composition donnée, on effectue un étalonnage en comparant des mesures effectuées par le moyen conforme à l'invention et des essais de traction, il est possible non seulement d'améliorer la régularité des fabrications, mais aussi de réduire la dispersion des caractéristiques mécaniques obtenues par rapport à la valeur visée, sans qu'il soit nécessaire de multiplier les tréfilages d'essai et les tris de bobines.

Afin de bien faire comprendre l'invention, on va maintenant décrire, à titre d'exemple, en se référant aux figures jointes en annexe, un exemple de mise en oeuvre de l'invention appliquée à la régulation d'une ligne de tréfilage d'un fil pour ressort en acier inoxydable austénitique.

La figure 1 est une vue schématique partielle d'une installation de tréfilage d'un fil et des moyens de réglage de la ligne de tréfilage à partir d'une mesure en continu réalisée suivant l'invention.

La figure 2 est une vue schématique d'un mode de réalisation, sous la forme d'un pont, d'un moyen de contrôle des variations d'impédance du bobinage électromagnétique, pendant le défilement du fil.

La figure 3 est un diagramme donnant la variation de la fréquence du courant d'excitation du bobinage électromagnétique en fonction du temps.

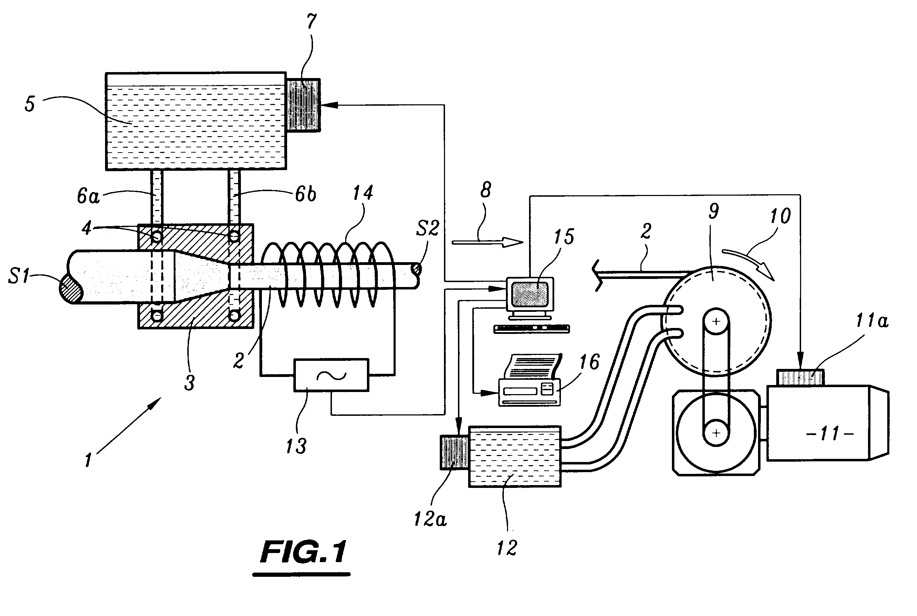

Sur la figure 1, on a représenté de manière schématique une installation de tréfilage désignée de manière générale par le repère 1.

L'installation de tréfilage 1 comporte une pluralité de filières placées successivement sur le trajet du fil 2 en cours de tréfilage.

De manière à simplifier la représentation, on n'a représenté qu'une seule filière 3 dans laquelle la section du fil 2 est réduite d'une valeur S1 à une valeur S2, le rapport S1/S2 constituant le rapport de réduction à travers la filière 3.

Le fil 2, dont on réalise la réduction dans des filières successives telles que la filière 3 est un fil en acier inoxydable austénitique, par exemple un fil en acier pour ressort ayant la composition suivante (pourcentages en poids):

| C | Si | Mn | Ni | Cr | N |
|------|-----|-----|-----|-----|------|
| 0,08 | 0,8 | 1 | 8,5 | 18 | 0,04 |

et un point de transformation martensitique dynamique $M_d$ de l'ordre de 15°C.

L'acier, coulé sous forme d'un lingot ou billette, est transformé par laminage en un fil machine d'un diamètre supérieur ou égal à 5 mm.

Le fil machine est hypertrempé depuis une température de 1050°C puis tréfilé sur l'installation de tréfilage jusqu'à un diamètre de 0,15 mm.

La résistance mécanique à la rupture visée pour le fil à la sortie de l'installation de tréfilage est d'environ 2000 MPa.

Le fil 2 au contact de la filière 3 s'échauffe depuis une température de 20 à 50°C, jusqu'à une température qui peut atteindre plusieurs centaines de degrés. Pour évacuer la chaleur et pour limiter l'échauffement du fil, la filière 3 comporte un circuit de refroidissement 4 qui peut être interne à la filière et constitué par un canal de circulation d'eau ou externe à la filière et constitué par un enroulement de refroidissement. Le circuit 4 de refroidissement de la filière 3 est alimenté en fluide de refroidissement à une température réglée, par une source de fluide de refroidissement 5 et une canalisation 6a d'alimentation du circuit de la filière. Une canalisation de retour 6b assure le retour de l'eau de refroidissement à la source 5 qui est pilotée par une unité de commande 7. L'unité de commande 7 de la source de fluide de refroidissement 5 permet de régler le débit de fluide de refroidissement envoyé au circuit de refroidissement 4 de la filière et la température du fluide de refroidissement.

Le fil 2 est entraîné, comme indiqué par la flèche 8, à travers la filière 3 par un cabestan 9 tournant dans le sens indiqué par la flèche 10 et assurant une traction sur l'extrémité du fil 2 à la sortie de la filière 3.

Le cabestan 9 est entraîné en rotation par un moteur 11 à vitesse réglable associé à un dispositif de réglage de vitesse 11a.

Le cabestan 9 peut être refroidi par l'intermédiaire d'un circuit de refroidissement 12, de manière à contrôler la température du fil à la sortie de l'installation ou encore dans une étape intermédiaire avec une seconde étape de tréfilage.

En pilotant l'intensité du refroidissement de la filière 3, la vitesse de défilement du fil imposée par le cabestan 9 et la température de sortie du fil, il est possible de régler les caractéristiques mécaniques de traction du fil obtenu à la sortie de l'installation de tréfilage et en particulier la résistance mécanique du fil.

Pour cela, la source d'eau de refroidissement 5 de la filière 3 et la vitesse de défilement imposée par le cabestan 9 peuvent être réglées de manière précise en fonction d'une mesure de la résistance mécanique du fil à la sortie de la filière 3 ou d'un ensemble de filières.

Selon l'invention, à la sortie de la filière 3, on fait passer le fil à travers un moyen de mesure en continu des caractéristiques mécaniques du fil, qui sera décrit plus loin, et on utilise cette mesure ou sa comparaison à une valeur de consigne pour réguler en continu le refroidissement de la filière 3 et la vitesse de défilement imposée par le cabestan 9 dont on peut réguler également le refroidissement. En procédant ainsi, on régule en continu les caractéristiques mécaniques du fil. En effet, ces caractéristiques dépendent non seulement du taux d'écrouissage qui est fixé par le diamètre d'entrée du fil et par le diamètre de la filière, mais également de la température à laquelle l'écrouissage est effectué. Or, la température à laquelle l'écrouissage est effectué dépend directement de la température de la filière et de la vitesse de tréfilage. Cette température dépend également de la température du fil à l'entrée de la filière. Lorsqu'il n'y a qu'une filière, cette température est la température ambiante dont les variations sont en général négligeable. Lorsque le tréfilage se fait par passage dans des filières successives, la température d'entrée dans une filière peut être régulée en agissant sur le refroidissement du cabestan associé à la filière précédente.

La mesure en continu des caractéristiques mécaniques du fil est effectuée par une méthode utilisant les courants de Foucault et qui consiste à mesurer en continu l'impédance d'une bobine électromagnétique alimentée par un courant variable et traversée par le fil tréfilé ; cette mesure, dont les conditions de réalisation seront décrites plus loin, étant faite de façon à éliminer les perturbations engendrées par les défauts de surface du fil.

En effet, bien qu'il soit connu qu'il est possible d'évaluer par une mesure magnétique le taux de martensite d'un fil tréfilé en acier inoxydable austénitique dont l'austénite est métastable, les inventeurs ont constaté de façon inattendue, d'une part que pour une analyse chimique donnée de l'acier, il y avait une corrélation suffisamment étroite entre une mesure magnétique et les caractéristiques mécaniques du fil pour pouvoir faire une mesure de ces caractéristiques, et d'autre part qu'une méthode de mesure par courants de Foucault telle qu'elle sera décrite plus loin permet de faire une mesure en continu suffisamment précise et réactive pour pouvoir faire une régulation efficace et en continu des caractéristiques mécaniques du fil au cours du tréfilage.

De plus, en effectuant un étalonnage a priori, il est possible non seulement d'effectuer une régulation qui assure la constance des caractéristiques mécaniques du fil tout au long d'une même bobine, mais encore, telle que ces caractéristiques mécaniques sont le plus proche possible des valeurs visées.

Pour réaliser cet étalonnage, on effectue une série de mesures magnétiques et d'essais de traction sur des fils ayant même composition chimique, même diamètre, mais correspondant à des taux d'écrouissage ou à des conditions d'écrouissage différentes, ayant des taux de martensite différents. L'ensemble des données ainsi rassemblées permet d'établir la relation entre mesure magnétique et caractéristiques mécaniques. Les inventeurs ont d'ailleurs constaté de façon surprenante que cette relation était quasi linéaire pour des taux de martensite variant entre pratiquement 0 % et pratiquement 100 %, par exemple entre 5 et 95 %.

Pour effectuer une régulation qui assure non seulement la constance des caractéristiques mécaniques tout au long du fil, mais aussi que ces caractéristiques sont le plus proche possible des valeurs visées, il suffit de réguler autour d'une valeur de la mesure magnétique déduite de la courbe d'étalonnage.

Selon l'invention, on fait passer le fil 2 à la sortie de la filière 3, à travers les spires d'un bobinage électromagnétique 14 alimenté en un courant variable, par une source de courant variable 13 reliée à une unité 15 de réglage de l'alimentation électrique et de traitement d'un signal variable du bobinage 14. L'unité 15 permet de mesurer l'impédance du bobinage électromagnétique 14 dont les spires sont traversées par le fil 2 et de comparer l'impédance à des valeurs de consigne.

L'unité de traitement 15 peut être constituée de préférence par un micro-ordinateur relié à un moyen 16 d'affichage des résultats de mesure.

L'unité de traitement 15 est également reliée au module 7 de réglage de la source d'eau de refroidissement 5 de la filière, au module 11a de réglage de vitesse du moteur 11 du cabestan 9 et au module 12a de réglage du circuit de refroidissement 12 du cabestan.

Dans le cas du bobinage 14 représenté sur la figure 1 traversé suivant son axe par le fil 2 en défilement, l'impédance de la bobine 14 dépend des courants induits produits par le courant variable de la bobine 14 dans le fil 2. Ces courants induits dépendent eux-mêmes des propriétés magnétiques du matériau du fil 2.

La valeur absolue de l'impédance de la bobine 14 peut s'écrire :

$$\left| Z_1 \right| = \sqrt{R_1{}^2 + L_1{}^2\, \omega^2}$$

dans laquelle R et L sont respectivement la résistance et l'inductance du bobinage électromagnétique et ω la pulsation du courant variable.

L'inductance L du bobinage électromagnétique dépend de la perméabilité magnétique μ du noyau constitué par le fil 2 en défilement à l'intérieur des spires du bobinage.

Du fait que le fil 2 est constitué par un acier austénitique amagnétique renfermant une certaine proportion de martensite ferromagnétique, la perméabilité magnétique p varie avec la proportion de martensite du fil 2.

Pendant le tréfilage du fil sur l'installation représentée sur la figure 1, la tension aux bornes du bobinage électromagnétique 14 et le courant mesurés par l'intermédiaire des unités 13 et 15 permettent de déterminer l'impédance du bobinage électromagnétique.

En réalité, comme il sera expliqué plus loin, on recourt généralement à des méthodes de mesure ou de comparaison utilisant, par exemple, un pont de mesure. L'impédance est alors comparée de manière automatique à une impédance d'équilibrage du pont, fixée au départ

Les valeurs d'impédance déterminées par l'unité de traitement 15 peuvent être comparées aux valeurs d'étalonnage précédemment fournies à l'unité de traitement 15 pour obtenir des valeurs de la résistance mécanique et/ou de la limite élastique qui peuvent être affichées sous une forme quelconque ou imprimées, au niveau du dispositif d'affichage 16 relié à l'unité de traitement 15.

En outre, les signaux d'impédance mesurés ou des signaux correspondant à la valeur de la résistance mécanique sont comparés à une valeur de consigne correspondant à la résistance mécanique du fil recherchée à la sortie de la filière 3.

En fonction de l'écart mesuré entre la valeur mesurée en continu et la valeur de consigne, des signaux de commande sont transmis au module 7 de commande de la source d'eau de refroidissement 5 de la filière 3 et/ou au module de commande 11a du moteur 11 du cabestan 9, pour régler le refroidissement de la filière 3 par réglage du débit et/ou de la température de l'eau de refroidissement de la source de refroidissement 5 et la température du fil au niveau de la filière et/ou la vitesse de défilement du fil, pour annuler l'écart entre l'impédance ou la résistance mécanique mesurée et la valeur de consigne. On peut réguler également le débit et la température de l'eau du circuit de refroidissement du cabestan 9 en fonction de l'impédance mesurée.

Du fait de la corrélation étroite entre la résistance mécanique à la rupture du fil et l'impédance du bobinage, on peut régler la valeur de la résistance mécanique à la sortie de la filière 3 avec une très bonne précision, ce qui était tout à fait impossible par les procédés suivant l'art antérieur.

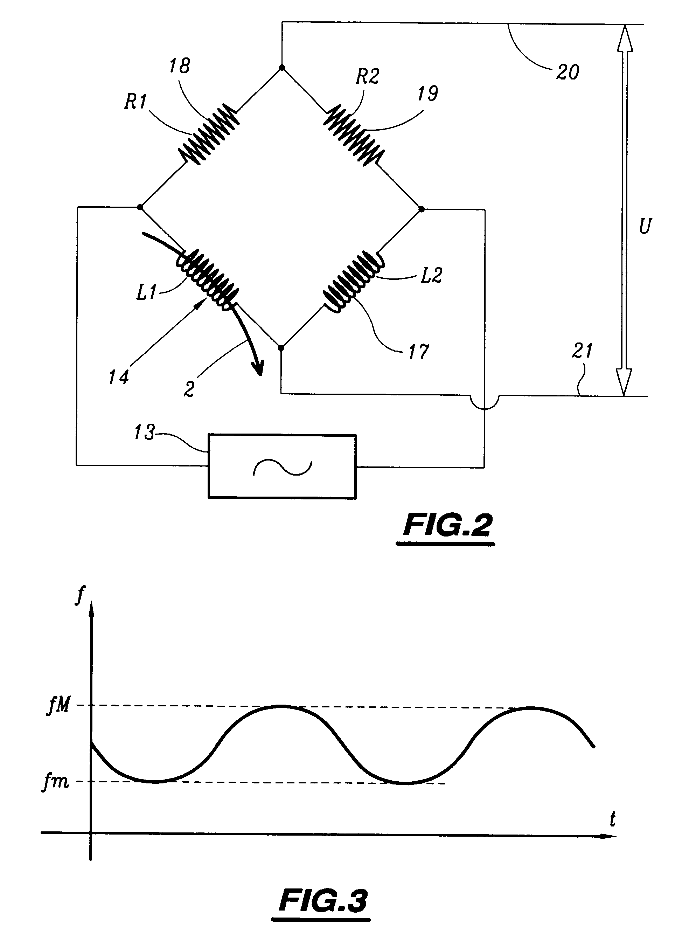

De préférence, le réglage de l'installation de tréfilage est réalisé à partir d'un pont dont l'une des branches est constituée par le bobinage électromagnétique 14 traversé par le fil 2, comme représenté sur la figure 2.

Le pont de mesure comporte une seconde branche constituée par un second bobinage électromagnétique 17, une troisième branche constituée par une première résistance électrique 18 et une quatrième branche constituée par une seconde résistance électrique 19.

L'alimentation en courant haute fréquence par l'intermédiaire de l'unité d'alimentation 13 est réalisée entre le point commun à la première et à la troisième branches et le point commun à la seconde et à la quatrième branches du pont.

Le signal de déséquilibre du pont est constitué par le signal de tension ou le courant entre le point commun à la première et à la seconde branches et le point commun à la troisième et à la quatrième branches du pont.

Le pont est équilibré pour une valeur de l'impédance du bobinage électromagnétique 14 correspondant à la présence d'un fil 2 dans le bobinage, dont la résistance mécanique à la rupture est égale à la résistance mécanique de consigne du fil après tréfilage.

Il est à remarquer que l'impédance du bobinage électromagnétique 14 et donc la mesure ou le réglage effectués ne dépendent pas de la position du fil à l'intérieur des spires du bobinage 14, de sorte que si le fil ne se trouve pas disposé de manière précise suivant l'axe du bobinage, il n'en résulte aucune erreur ou perturbation des mesures ou de la régulation.

Le déséquilibre du pont détecté sous forme d'un courant ou d'une tension entre les branches de mesure 20 et 21 résulte de la différence de l'impédance $Z_1$ des première et troisième branches 14 et 18 et de l'impédance $Z_2$ des seconde et quatrième branches 17 et 19 en série l'une par rapport à l'autre.

En appelant R1 et R2 les valeurs des résistances 18 et 19, respectivement, et L1 et L2, les inductances respectives des bobinages 14 et 17, on peut exprimer les valeurs absolues des impédances $Z_1$ et $Z_2$ et leur différence de la manière suivante :

$$|Z_1| = \sqrt{R_1{}^2 + L_1{}^2\,\omega^2}$$

$$|Z_2| = \sqrt{R_2{}^2 + L_2{}^2\,\omega^2}$$

$$|Z_1| - |Z_2| = \sqrt{R_1{}^2 + L_1{}^2\,\omega^2} - \sqrt{R_2{}^2 + L_2{}^2\,\omega^2}.$$

Le déséquilibre du pont qui est détecté permet d'obtenir la différence des impédances $Z_1$ et $Z_2$.

La différence des valeurs absolues des impédances $Z_1$ et $Z_2$ est une fonction de la pulsation $\omega$ du courant d'alimentation qui peut être représentée graphiquement par une courbe.

De manière à pouvoir effectuer les mesures dans une partie pratiquement linéaire de la courbe et pour annuler le déphasage entre les impédances $Z_1$ et $Z_2$, on ajuste la résistance R1 en fonction de la pulsation $\omega$ du courant d'alimentation du bobinage.

Dans ce but, la résistance R1 dans la troisième branche 18 du pont est une résistance variable, du type rhéostat, pilotée en fonction de la fréquence du courant de la source d'alimentation 13.

Comme il est visible sur la figure 3, le courant d'alimentation du pont représenté sur la figure 2, ou du bobinage représenté sur la figure 1, est un courant à fréquence modulée. La fréquence varie de manière périodique au cours du temps entre une valeur minimale fm et une valeur maximale fM choisies en fonction du diamètre du fil sur lequel on effectue la mesure ou plus généralement en fonction de la dimension de la section du produit long dans la zone de mesure.

En général, la fréquence fm est comprise entre 40 et 50 kHz et la fréquence fM est comprise entre 200 et 300 kHz.

La fréquence modulée de façon périodique permet de faire varier la pénétration des courants à l'intérieur du fil, entre une couche de surface de très faible épaisseur pour la fréquence maximale fM et la totalité de la section du fil, pour la fréquence minimale fm.

On réalise l'intégration du signal de déséquilibre du pont (ou le signal d'impédance) sur une durée correspondant à un nombre entier de périodes de variation de la fréquence.

On élimine ainsi les influences perturbatrices des défauts de surface du fil, ces défauts pouvant faire l'objet d'une détection classique de type « courants de Foucault », par un traitement spécifique du signal.

La résistance R1 est une résistance variable du type rhéostat et une inductance variable à noyau plongeur est disposée en série avec le bobinage 14 dans la branche correspondante du pont.

On peut ainsi réaliser l'équilibrage du pont de manière à pouvoir utiliser le signal de déséquilibre comme valeur de consigne pour piloter l'installation de tréfilage, comme il a été décrit plus haut.

L'invention permet en particulier d'obtenir des fils en acier inoxydable austénitique à l'état hypertrempé et écroui qui présentent une résistance mécanique à la rupture de l'ordre de 2000 MPa obtenue avec une précision meilleure que 20 MPa, suivant toute la longueur du fil produit en continu dans une installation de tréfilage ou de manière plus générale, une variation inférieure à 1 % de la résistance mécanique du fil suivant sa longueur, ces fils ayant un diamètre pouvant aller de 0,1 mm à 20 mm, et de préférence de 0,15 mm à 2,5 mm.

Les fils ainsi obtenus ont l'avantage de permettre de fabriquer en série des ressorts dont les caractéristiques sont peu dispersées. En effet, les inventeurs ont constaté de façon inattendue que les difficultés rencontrées lors de la fabrication de ressorts à partir de fils selon l'art antérieur résultaient notamment de manques de régularité des caractéristiques mécaniques le long de fils issus d'une même bobine.

Le procédé de mesure suivant l'invention peut être utilisé également pour effectuer la mesure de la résistance mécanique et/ou de la limite élastique de produits longs différents de fils pour ressorts, tels que des fils ou des barres en acier austénitique pour la fabrication de câbles, de vis, de boulons, de tiges, de crochets, de tissus ou de tresses. Dans tous les cas, des fils ou barres en acier austénitique hypertrempé, dont la proportion de martensite a' est comprise entre pratiquement 0 et pratiquement 100 %, peuvent être obtenus en continu avec des caractéristiques mécaniques de traction telles que la résistance à la rupture et la limite élastique soient constantes à mieux de 1 %.

L'invention peut être également utilisée pour régler le laminage de feuillards de faible largeur de manière que les feuillards présentent des caractéristiques mécaniques de traction parfaitement constantes suivant toute leur longueur. Dans ce cas, le feuillard en défilement est amené à passer dans un bobinage électromagnétique dont la section peut être aplatie.

L'invention ne se limite pas aux modes de réalisation qui ont été décrits.

C'est ainsi qu'on peut utiliser tout procédé ou tout dispositif de mesure d'impédance pour déterminer l'impédance du bobinage électromagnétique traversé par le produit long en défilement.

Les mesures d'impédance ou de variations d'impédance effectuées ou encore le signal de déséquilibre d'un pont de mesure peuvent être utilisés pour fournir des valeurs de la résistance mécanique ou de la limite élastique du produit long ou encore pour réaliser la régulation d'une installation de fabrication du produit long par transformation mécanique, par exemple par tréfilage et/ou laminage.

L'invention s'applique d'une façon générale aux fils ronds ou profilés, et plus généralement aux produits longs, en alliage comportant une phase amagnétique métastable susceptible de se transformer par écrouissage, partiellement ou totalement, en une phase magnétique. C'est le cas, notamment, des aciers austénitiques dont l'austénite est métastable à la température ambiante, que ces aciers soient inoxydables ou non, qu'ils contiennent principalement, outre du fer, du nickel ou du manganèse. C'est le cas, en particulier des aciers austénitiques pour ressort dont la composition chimique comprend, en poids, de 6 à 12 % de nickel, de 16 à 20 % de chrome, au plus 0,15 % de carbone, au plus 0,15 % d'azote, de 0 à 2 % de silicium et de 0 à 2 % de manganèse, le reste étant du fer et des impuretés dues à l'élaboration. L'acier peut en outre renfermer éventuellement des éléments d'alliage complémentaires en petites quantités.

L'invention s'applique également à des produits longs en acier austénitiques au manganèse ou renfermant du molybdène, du cobalt ou d'autres éléments d'alliage.

Lorsque le produit long est un feuillard laminé à froid, la régulation des conditions de laminage peut être faite en agissant, notamment, sur la lubrification et sur la vitesse de laminage.

## Revendications

**1.** Procédé de mesure en continu d'une caractéristique mécanique d'un produit long (2) en acier austénitique à l'état hypertrempé renfermant de la martensite, pendant le défilement du produit long (2), caractérisé par le fait qu'on fait passer le produit long (2) à travers au moins une spire d'un bobinage électromagnétique (14) alimenté en courant variable, qu'on mesure en continu l'impédance du bobinage électromagnétique (14) et qu'on détermine la caractéristique mécanique du produit long (2) ou ses variations par comparaison de l'impédance mesurée avec au moins une valeur d'impédance prédéterminée.

**2.** Procédé suivant la revendication 1, caractérisé par le fait qu'on réalise, à partir de la mesure d'impédance et de valeurs d'étalonnage, une mesure de la résistance mécanique à la rupture et/ou de la limite élastique du produit long.

**3.** Procédé suivant l'une quelconque des revendications 1 et 2, caractérisé par le fait qu'on alimente le bobinage électromagnétique (14) en un courant alternatif dont la fréquence est modulée et varie de manière périodique au cours du temps entre une valeur minimale (fm) et une valeur maximale (fM).

**4.** Procédé suivant la revendication 3, caractérisé par le fait que la fréquence minimale (fm) et la fréquence maximale (fM) sont choisies en fonction de la dimension de la section du produit sur lequel on effectue la mesure et la fréquence minimale (fm) est généralement comprise entre 40 et 50 kHz et la fréquence maximale (fM) entre 200 et 300 kHz.

5. Dispositif de mesure pour la mise en oeuvre du procédé suivant l'une quelconque des revendications 1 à 4, caractérisé par le fait qu'il comporte un bobinage électromagnétique (14) disposé de manière que ses spires soient traversées par le produit long (2) en défilement, une source de courant (13) d'alimentation du bobinage (14) en courant variable, un moyen (15) de mesure de l'impédance du bobinage électromagnétique (14) et de comparaison de l'impédance avec des valeurs d'étalonnage et des moyens d'affichage des valeurs de la caractéristique mécanique obtenue par comparaison.

6. Dispositif suivant la revendication 5, caractérisé par le fait que l'unité d'alimentation (13) en courant variable est une unité d'alimentation en courant alternatif à fréquence variable modulée entre une valeur de fréquence minimale (fm) et une valeur de fréquence maximale (fM).

7. Dispositif pour la mise en oeuvre du procédé suivant l'une quelconque des revendications 1 à 4, caractérisé par le fait que le bobinage électromagnétique (14) dans lequel on fait passer le produit long (2) constitue une première branche d'un pont dont une seconde branche est constituée par un bobinage électromagnétique (17) en série avec la première branche, une troisième branche constituée par une résistance électrique (18) en série avec la première branche et une quatrième branche constituée par une résistance électrique (19) en série avec la seconde et avec la troisième branches du pont, et une source de courant variable (13) intercalée entre un point commun à la première et à la troisième branches et un point commun à la seconde et à la quatrième branches du pont, un courant ou une tension de déséquilibre du pont étant capté entre un point commun à la première et à la seconde branches du pont et un point commun à la troisième et à la quatrième branches du pont, pour déterminer les variations d'impédance du bobinage électromagnétique (14) constituant la première branche du pont.

8. Dispositif suivant la revendication 7, caractérisé par le fait que la résistance (18) constituant la troisième branche du pont est une résistance variable pilotée en fonction de la fréquence du courant d'alimentation du bobinage électromagnétique.

9. Procédé de production en continu d'un produit long (2) en acier austénitique à l'état hypertrempé consistant à faire passer le produit long dans au moins une filière (3), de manière à réduire la section du produit long (2), par traction sur le produit long à l'aide d'un cabestan (9), la ou les filières (3) comportant un circuit de refroidissement (4) alimenté par une source d'eau de refroidissement (5), le cabestan (9) étant entraîné par un moteur (11) à vitesse variable associé à une unité (11a) de réglage de la vitesse variable du moteur, caractérisé par le fait qu'à la suite de l'au moins une filière (3) on fait passer le produit (2) dans un bobinage électromagnétique (14) alimenté en courant variable, qu'on mesure l'impédance du bobinage dans lequel le produit long (2) est en défilement et qu'on régule l'un au moins des paramètres: débit d'eau de refroidissement de la source (5) d'alimentation du circuit de refroidissement (4) de la filière (3), température de l'eau de refroidissement de la source (5) de refroidissement, vitesse du moteur d'entraînement (11) du cabestan (9), à partir de la valeur de l'impédance du bobinage électromagnétique (14) mesurée.

10. Procédé selon la revendication 9, le cabestan (9) étant refroidi par un circuit de refroidissement (12) assurant la circulation d'eau de refroidissement dans le cabestan, caractérisé par le fait que le débit et la température de l'eau du circuit de refroidissement (12) du cabestan (9) sont régulés en fonction de l'impédance du bobinage électromagnétique (14) mesurée.

11. Produit long en acier austénitique hypertrempé renfermant une proportion de martensite (a') comprise entre pratiquement 0 et pratiquement 100% obtenu par le procédé suivant l'une quelconque des revendications 9 et 10, caractérisé par le fait que la résistance mécanique à la rupture par traction du produit long est constante suivant toute la longueur du produit long, avec une précision meilleure que 1 %.

12. Produit long selon la revendication 11, caractérisé par le fait que le produit long est un fil pour la fabrication d'un ressort hélicoïdal, dont le diamètre est compris entre 0,10 et 20 mm et de préférence entre 0,15 et 2,5 mm.

13. Produit long suivant l'une quelconque des revendications 11 et 12, caractérisé par le fait qu'il renferme (en poids) :

| | |
|---|---|
| Ni | 6 -12 % |
| Cr | 16 - 20 % |
| C | ≤ 0.15 % |
| N | ≤ 0.15 % |
| Si | 0 - 2 % |
| MN | 0 - 2 % |

le solde étant constitué par du fer et des impuretés dues à l'élaboration.

**FIG.1**

EP 0 947 830 A1

**_FIG.2_**

**_FIG.3_**

# EP 0 947 830 A1

| Office européen des brevets | RAPPORT DE RECHERCHE EUROPEENNE | Numéro de la demande |
| --- | --- | --- |
| | | EP 99 40 0348 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
| --- | --- | --- | --- |
| X | EP 0 445 983 A (GENERAL ELECTRIC COMPANY) 11 septembre 1991 * abrégé * * colonne 1, ligne 9 - ligne 10 * * colonne 3, ligne 30 - ligne 41; figure 1 * --- | 1,5 | G01N27/90 G01N27/72 |
| A | GB 2 193 810 A (INSITUT PRIKLADNOI FIZIKI AKADEMII NAUK BELARUSSKOI SSR) 17 février 1988 * abrégé * * page 1, ligne 129 - page 2, ligne 6; figure 1 * --- | 1-13 | |
| A | US 3 646 789 A (FÖRSTER) 7 mars 1972 * abrégé * * colonne 2, ligne 11 - colonne 3, ligne 33; figure 1 * ----- | 1-13 | |

**DOMAINES TECHNIQUES RECHERCHES (Int.Cl.6)**

G01N

Le présent rapport a été établi pour toutes les revendications

| Lieu de la recherche | Date d'achèvement de la recherche | Examinateur |
| --- | --- | --- |
| LA HAYE | 19 mai 1999 | Kempf, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

10

## ANNEXE AU RAPPORT DE RECHERCHE EUROPEENNE
## RELATIF A LA DEMANDE DE BREVET EUROPEEN NO.

EP 99 40 0348

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-05-1999

| Document brevet cité au rapport de recherche | | Date de publication | Membre(s) de la famille de brevet(s) | | Date de publication |
|---|---|---|---|---|---|
| EP 445983 | A | 11-09-1991 | US | 5175498 A | 29-12-1992 |
| | | | JP | 2735701 B | 02-04-1998 |
| | | | JP | 4220557 A | 11-08-1992 |
| GB 2193810 | A | 17-02-1988 | DE | 3628481 A | 25-02-1988 |
| | | | FR | 2603381 A | 04-03-1988 |
| US 3646789 | A | 07-03-1972 | AUCUN | | |

EPO FORM P0460

Pour tout renseignement concernant cette annexe : voir Journal Officiel de l'Office européen des brevets, No.12/82